## Europäisches Patentamt

## European Patent Office

## Office européen des brevets

(11) Numéro de publication: **0 203 834**
**B1**

(12) **FASCICULE DE BREVET EUROPÉEN**

(45) Date de publication du fascicule du brevet:
**08.06.88**

(21) Numéro de dépôt: **86400721.6**

(22) Date de dépôt: **03.04.86**

(51) Int. Cl.⁴: **B 62 B 5/00**

(54) **Dispositif de solidarisation d'une série de chariots d'achat, emboîtés les uns dans les autres.**

(30) Priorité: **21.05.85 FR 8507601**

(43) Date de publication de la demande:
**03.12.86 Bulletin 86/49**

(45) Mention de la délivrance du brevet:
**08.06.88 Bulletin 88/23**

(84) Etats contractants désignés:
**DE GB IT**

(56) Documents cité:
**GB-A-2 049 565**
**US-A-2 497 234**
**US-A-3 014 738**

(73) Titulaire: **ATELIERS REUNIS CADDIE, 13, rue de la Mairie Boîte Postal47, F-67041 Strasbourg Cédex (FR)**

(72) Inventeur: **Weill, Guy, 13, Avenue du Ried, F-67800 Hoenheim (FR)**

(74) Mandataire: **Tony- Durand, Serge, Cabinet Tony-Durand 77, rue Boissière, F-75116 Paris (FR)**

## Description

La présente invention concerne les chariots d'achat mis à la disposition de la clientèle dans les magasins à libre-service ou similaires.

De façon a pouvoir être groupés sous un volume d'encombrement aussi restreint que possible, ces chariots sont conçus de manière à pouvoir être emboîtés les uns à l'intérieur des autres lorsqu'ils ne sont pas utilisés. Ceci facilite également la manutention de ces chariots pour les amener sur un lieu de stationnement où ils sont mis à la disposition de la clientèle. Ainsi, après avoir regroupé une série de chariots abandonnés par leurs précédents utilisateurs, les préposés d'un magasin de vente peuvent les faire rouler sous forme d'une file d'un seul tenant pour les amener à l'un des points où il est prévu de placer un groupe de chariots à la disposition de la clientèle (ette opération est décrite, par exemple, dans GB-A-2 049 565).

Cependant, lors de cette manoeuvre, il arrive très fréquemment que les chariots se déboîtent, ce qui entraîne la dissociation de la file correspondante. Dans ces conditions, la manoeuvre d'une file de chariots requiert l'intervention de deux préposés, à savoir l'un à l'avant et l'autre à l'arrière. Mais, il arrive très fréquemment que la cohésion des files de chariots se trouve rompue au cours de leur déplacement.

C'est pourquoi, la présente invention à pour objet un dispositif spécialement conçu pour assurer la solidarisation d'une série de chariots d'achat emboîtés les uns dans les autres sous forme d'une file continue.

Ce dispositif est caractérisé en ce qu'il consiste en une barre de liaison apte à assurer une liaison directe entre les deux chariots situés aux extrémités de la file ainsi constituée, et dont chaque extrémité porte une traverse, chaque traverse étant pourvue de deux crochets coudés en sens inverse sur une traverse et sur l'autre, ces crochets étant susceptibles d'être accrochés sur la poignée transversale de manoeuvre des deux chariots situés aux extrémités d'une même file, de façon à serrer ensemble les divers chariots de celle-ci en les maintenant emboîtés les uns dans les autres.

Ainsi, cette file de chariots présente une parfaite cohésion et elle peut être manoeuvrée aisément car les différents chariots la constituant ne peuvent en aucune façon se déboîter et se séparer les uns des autres au cours de leur déplacement.

Un exemple de réalisation du présent dispositif est décrit ci-dessous, en référence au dessin annexé à simple titre d'exemple. Sur ce dessin :

La figure 1 est une vue en perspective du présent dispositif,

La figure 2 est une vue schématique en perspective d'une série de chariots maintenus accouplés au moyen de ce dispositif,

La figure 3 est une vue en élévation de côté de celui-ci, laquelle illustre l'opération d'accrochage de ce dispositif sur les deux chariots situés aux extrémités d'une même file.

Le présent dispositif est essentiellement constitué par une barre 1 de liaison dont chaque extrémité porte une traverse 2 ou 3 pouvue de deux crochets, respectivement 4 et 5. De préférence, la barre de liaison 1 est télescopique comme cela est le cas dans l'exemple représenté. En effet, dans cet exemple cette barre est constituée par une tige métallique 6 dont une extrémité est montée coulissante à l'intérieur d'un tube métallique 7, ces deux éléments pouvant être immobilisés dans la position voulue au moyen d'une vis de blocage 8. Dans ces conditions, les traverses 2 et 3 sont portées par les extrémités opposées de la tige 6 et du tube 7 sur lesquelles elles sont fixées par soudure.

Ces traverses sont en fait constituées l'une et l'autre par un fil métallique dont les extrémités sont coudées pour former les crochets 4 et 5. Ces crochets sont coudés en sens inverse sur l'une et l'autre traverses, chacun d'eux étant ouvert en direction de la traverse opposée.

A ce sujet, il convient de noter que les crochets de la traverse 3, qui est destinée à être disposée à l'arrière, comportent chacun un prolongement 9 formant une rampe apte à faciliter l'engagement à force de ce crochet sur la poignée de manoeuvre 10 du chariot situé à l'arrière d'une file. Cependant, chacun de ces prolongements comporte lui-même une extension 11 qui est coudée vers l'arrière pour servir d'organe de manoeuvre pour le dégagement ultérieur de la présente barre de liaison.

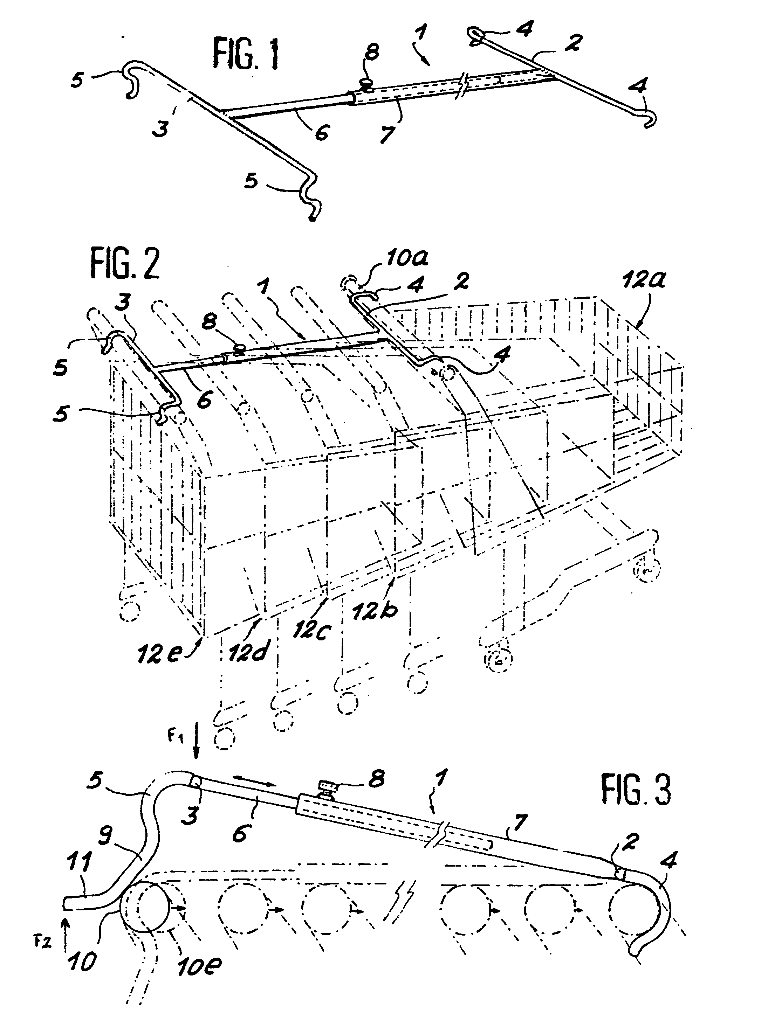

Comme déja indiqué, la figure 2 représente un groupe de cinq chariots d'achat 12a, 12b...12d emboîtés les uns dans les autres pour former une file d'un même tenant. Intentionnellement, dans le but de simplifier le dessin, cette file ne comporte que cinq chariots. Mais, dans la pratique les files, qui doivent être déplacées sur une aire de stationnement, comportent en général vingt-cinq à trente chariots. C'est la raison pour laquelle la barre de liaison 1 peut présenter une longueur d'environ deux mètres à deux mètres cinquante. Cependant, grâce au fait que cette barre est télescopique, sa longueur peut être modifiéen fonction du nombre exact de chariots prévus dans la file à manoeuvrer. A ce sujet, il faut observer que ce réglage de longueur est effectué avant la mise en place du présent dispositif, en prévoyant que celui-ci exerce un serrage des chariots les uns dans les autres, ce qui ne serait pas possible si ce réglage avait lieu après sa mise en place. A cet effet, il peut être éventuellement prévu des repères sur la tige 6 pour indiquer les différentes positions à adopter suivant le nombre de chariots prévus dans la file à manoeuvrer.

Après que les chariots de cette file aient été emboîtés les uns dans les autres, la mise en place du présent dispositif s'effectue en engageant tout d'abord les crochets 4 de la traverse 2 sur la poignée de manoeuvre 10a du chariot 12a situé à l'extrémité avant. Puis, à partir de la position illustrée à la figure 3, on appuie sur la traverse arrière 3 selon la flèche F1, ce qui amène les rampes 9 à glisser contre la partie arrière de la poignée 10 du chariot 12e situé à l'extrémité arrière, jusqu'à ce que les crochets 5 se trouvent engagés sur cette poignée. Les rampes 9 repoussent donc cette poignée dans la position 10e (voir figure 3) en assurant ainsi un serrage des différents chariots les uns dans les autres. Ce serrage est rendu possible par le fait des jeux existants ainsi que de l'élasticité relative des chariots qui sont réalisés en fils métalliques.

Grâce à ce serrage, les chariots sont donc maintenus fermement emboîtés les uns dans les autres. Dans ces conditions, la file ainsi constituée ne risque pas de se dissocier au cours des manoeuvres nécessaires à son déplacement. Cette opération peut donc être réalisée par un seul préposé situé à l'arrière pour pousser la file de chariots. Il en résulte un gain de temps considérable du fait de l'impossibilité de dissociation des files de chariots en cours de manoeuvre.

Le retrait du présent dispositif peut être effectué très facilement en exerçant une poussée vers le haut, selon la flèche F2, sur les extensions 11 des crochets 5 de la traverse arrière 3.

## Revendications

1. Dispositif pour la solidarisation d'une série de chariots d'achat emboîtés les uns dans les autres, caractérisé en ce qu'il consiste en une barre de liaison (1) apte à assurer une liaison directe entre les deux chariots situés aux extrémités de la file ainsi constituée, et dont chaque extrémité porte une traverse (2 ou 3), chaque traverse étant pourvue de deux crochets (4 ou 5) coudés en sens inverse sur une traverse et sur l'autre, ces crochets étant susceptibles d'être accrochés sur la poignée transversale de manoeuvre des deux chariots (12a, 12e) situés aux extrémités d'une même file, de façon à serrer ensemble les divers chariots de celle-ci en les maintenant emboîtés les uns dans les autres.

2. Dispositif selon la revendication 1, caractérisé en ce que la barre de liaison (1) est télescopique, ce qui permet de l'adapter sur des files de chariots comprenant un nombre plus ou moins grand de chariots.

3. Dispositif selon la revendication 1 ou 2, caractérisé en ce que les crochets (5) prévus à l'extrémité arrière comportent un prolongement (9) formant une rampe apte à faciliter l'engagement à force de ces crochets sur la poignée de manoeuvre (10) du chariot arrière d'une file, ces prolongements (9) comportent eux même une extension (11) coudée vers l'arrière et apte à servir d'organe de manoeuvre pour le dégagement des crochets correspondants.

## Patentansprüche

1. Vorrichtung zur Befestigung einer Reihe ineinandergeschachtelter Einkaufswagen aneinander, gekennzeichnet durch eine Verbindungsstange (1), welche eine direkte Verbindung zwischen den äußersten Wagen der Reihe herstellt und die an jedem Ende eine Querstange (2) oder (3) trägt, wobei jede Querstange mit zwei Haken (4) oder (5) versehen ist, die jeweils in Richtung auf die gegenüberliegende Querstange gebogen sind und sich auf der querverlaufenden Längsstange der äußeren Wagen (12a, 12e) einer Reihe einhängen lassen, so daß sich mehrere Wagen aneinander befestigen lassen, indem sie ineinandergeschachtelt gehalten sind.

2. Vorrichtung nach Anspruch 1, dadurch gekennzeichnet, daß die Verbindungsstange (1) teleskopartig ausgebildet ist und sich auf eine mehr oder weniger große Anzahl Wagen einstellen läßt.

3. Vorrichtung nach Anspruch 1 oder 2, dadurch gekennzeichnet, daß die am hinteren Ende angeordneten Haken (5) mit einer Verlängerung (9) versehen sind, die eine das Einhängen der Haken an der Längsstange (10) des hinteren Wagens der Reihe erleichternde Rampe bilden, wobei diese Verlängerungen (9) eine nach hinten gebogene Erweiterung (11) tragen, die als Bedienungsorgan beim Aushaken der entsprechenden Haken dienen.

## Claims

1. Device for holding together a series of shopping trolleys which are nested within each other, characterized in that it consists of a coupling bar (1) which is capable of providing a direct connection between the two trolleys located at the ends of the row thus formed and each end of which carries a cross-member (2 or 3), each cross-member being provided with two hooks (4 or 5) elbowed in opposite directions on one cross-member and on the other, these hooks being capable of engagement on the transverse handle bar of the two trolleys (12a, 12e) located at the ends of one and the same row in such a manner as to hold the various trolleys of this row together while maintaining them in interengaged relation.

2. Device in accordance with claim 1, characterized in that the coupling bar (1) is telescopic and may thus be adapted to rows of trolleys consisting of a greater or lesser number of trolleys.

3. Device in accordance with claim 1 or 2, characterized in that the hooks (5) provided at the rear end have an extension (9) forming a ramp which is capable of facilitating forcible engagement of these hooks on the handle bar (10) of the rear trolley of a row, these extensions (9) are in turn provided with an extension (11) which is rearwardly elbowed and capable of serving as an operating member for disengagement of the corresponding hooks.

FIG. 1

FIG. 2

FIG. 3